# EUROPÄISCHE PATENTSCHRIFT

(11) **EP 1 268 164 B1**
(45) Veröffentlichungstag und Bekanntmachung des Hinweises auf die Patenterteilung: **13.08.2003**
(21) Anmeldenummer: 01955094.6
(22) Anmeldetag: 05.02.2001
(51) Int. Cl.: B29C 53/56

(54) **BAUTEIL AUS FASERVERSTÄRKTEM KUNSTSTOFF UND VERFAHREN ZUR HERSTELLUNG DESSELBEN**
COMPONENT CONSISTING OF A FIBRE-REINFORCED SYNTHETIC MATERIAL AND A METHOD FOR PRODUCING SAME
COMPOSANT EN MATIERE SYNTHETIQUE RENFORCEE PAR FIBRES ET SON PROCEDE DE PRODUCTION

(30) Priorität: 03.03.2000 CH 4132000
(43) Veröffentlichungstag der Anmeldung: 02.01.2003
(73) Patentinhaber: Proteus GmbH, 9473 Gams (CH)
(72) Erfinder: LINDENAU, Emil, CH-2076 Gals (CH)
(74) Vertreter: Schreiber, Wolfgang F.
(86) Internationale Anmeldenummer: CH0100077
(87) Internationale Veröffentlichungsnummer: WO01064426

(56) Entgegenhaltungen:
- DE-A- 1 933 228
- DE-A- 2 711 551
- DE-A- 3 003 666
- DE-A- 3 629 758
- DE-A- 4 123 185

## Beschreibung

Die Erfindung betrifft ein Bauteil aus faserverstärktem Kunststoff gemäss dem Oberbegriff des Patentanspruchs 1. Die Erfindung betrifft weiters aucb ein Verfahren zur Herstellung eines aus faserverstärktem Kunststoff gewickelten Bauteils, beispielsweise eines Trägers oder einer Felge.

Faserverstärkte Kunststoffe finden zunehmend Verbreitung in der Herstellung von Bauteilen in Leichtbauweise. Durch die Fortschritte in der Materialentwicklung im Bereich der Kunststoffe und der Fasermaterialien und das geringe Gewicht der Bauteile werden diese vor allem auch im Fahrzeugbau für die Herstellung von Karosserieteilen, im Bau von Schienenfahrzeugen für Fahrgastzellen, aber auch im Flugzeugbau verwendet. Je nach Art des Bauteils werden zur Herstellung der Bauteile Laminiertechniken, Injektionsverfahren (Resin Transfer Moulding) oder Faserwickelverfahren eingesetzt.

Das Faserwickelverfahren zählt zu den ersten Herstellungsverfahren, die für die Verarbeitung von Composites entwickelt wurden. Der Vorteil des Verfahrens liegt darin, das die Fasern in einem kontinuierlichen Prozess auf einen Formkern gewickelt werden. Dabei werden die Fasern häufig im selben Arbeitsgang mit einem Harz durchtränkt und nass imprägniert. Das Faserwickelverfahren zeichnet sich durch eine hohe Laminatqualität und eine hohe Genauigkeit im Faserharzgehalt und in der Faserorientierung bei gleichzeitig hohem Automatisierungsgrad und hoher Wirtschaftlichkeit aus. Neben der Herstellung kleinerer Spezialbauteile, beispielsweise von Abdeckkappen für Rotoren und dergleichen, kommt das Faserwickelverfahren auch für die Herstellung von Deckschichten zum Einsatz, die beispielsweise im Fall von Fahrgastzellen um einen grossen rechteckigen Hohlkern aus Hartschaumstoff gewickelt wird.

Für die Herstellung von tragenden Bauteilen, beispielsweise von Trägern im Maschinen- und Fahrzeugbau, kommen trotz der bekannten Vorteile der Composites immer noch hauptsächlich konventionelle Werkstoffe, wie Stahl, Aluminium oder Titan zur Verwendung. Diese werden gegossen, in Formen gepresst oder aus dem Vollen spanabhebend bearbeitet. Es sind auch derartige Bauteile aus Thermoplasten bekannt, die aber gleichfalls entweder gegossen oder in Formen gepresst werden.

Die bekannten Materialien für die Herstellung von tragenden Bauteilen weisen alle entweder ein hohes Gewicht auf oder sie sind aufwendig und teuer in der Herstellung und der Verarbeitung. Der Einsatz von Kunststoffverbundmaterialien bei der Herstellung von Fahrzeugen in Leichtbauweise führte bislang nicht zu den gewünschten Ergebnissen. Insbesondere im Crash-Verhalten weisen die bekannten Kunststoffbauweisen nur ungenügende Resultate auf, weshalb sie im allgemeinen durch vergleichsweise schwere Metallkonstruktionen für die crash-relevanten, tragenden Bauteile ergänzt werden.

Aufgabe der vorliegenden Erfindung ist es, diesen Nachteilen des Stands der Technik abzuhelfen. Es sollen Bauteile aus faserverstärkten Kunststoffen geschaffen werden, die insbesondere auch als tragende Bauteile im Maschinenbau und im Fahrzeugbau einsetzbar sind. Es soll eine Konstruktion für derartige Bauteile geschaffen werden, die flexibel einsetzbar ist und eine definierte Auslegung der Bauteile ermöglicht. Dazu soll ein Verfahren geschaffen werden, dass es ermöglicht, derartige tragende Bauteile gemäss den spezifischen Anforderungen auszulegen und herzustellen. Das Verfahren soll automatisierbar sein und in einem hohen Mass reproduzierbare Ergebnisse ermöglichen. Die derart hergestellten Bauteile aus einem faserverstärkten Kunststoff sollen bei hohen Festigkeitseigenschaften ein geringes Gewicht aufweisen und kostengünstig in der Herstellung sein.

Die Lösung dieser Aufgaben besteht in einem Bauteil aus faserverstärktem Kunststoff mit den im kennzeichnenden Abschnitt des Patentanspruchs 1 angeführten Merkmalen. Vorteilhafte Weiterbildungen und/oder Varianten der Erfindung sind Gegenstand der abhängigen Vorrichtungsansprüche. Das erfindungsgemässe Verfahren zeichnet sich insbesondere durch die im kennzeichnenden Abschnitt des unabhängigen Verfahrensanspruchs angeführten Schritte aus. Vorteilhafte Weiterbildungen und/oder Varianten der Verfahrensführung sind Gegenstand der abhängigen Verfahrensansprüche.

Bei einem Bauteil aus faserverstärktem Kunststoff ist ein kunstharzharzimprägniertes Fascrhalbzeug, vorzugsweise in mehreren Schichten, mit vorzugsweise direktionierten Fasern um einen Wickelkern gewickelt. Das Bauteil ist als tragendes Element ausgebildet und umfasst gewickelte Aussengurtteile, die durch eine fachwerkartig gewickelte Zwischenstruktur miteinander verbunden sind. Die Hohlräume zwischen den Aussengurtteilen und der Zwischenstruktur sind wenigstens bercichsweise mit einem Füllmaterial ausgefüllt.

Durch die erfindungsgemässe Ausbildung des tragenden Bauteils ist dieses relativ einfach auslegbar. Im Gegensatz zu den bisherigen, gegossenen oder in Formen gepressten Bauteilen, bietet die fachwerkartig gewickelte Trägerstruktur die Möglichkeit, das Tragverhalten zu berechnen. In der Praxis erfolgt der umgekehrte Vorgang, indem von einer zu erwartenden oder vorgegebenen Belastung ausgehend die erforderliche Struktur, der Wickelverlauf und die Wicklungsdichte festgelegt wird. Die Herstellung des fachwerkartigen Bauteils erfolgt sodann in Abhängigkeit von den ermittelten Werten durch das hinlänglich bekannte Faserwickelverfahren, Die Hohlräume zwischen den Aussengurtteilen und der Zwischenstruktur sind wenigstens bereichsweise mit einem Füllmaterial ausgefüllt. Das Füllmaterial stützt die auf Druck belasteten Abschnitte der fachwerkartigen Zwischenstruktur und verhindert ein unkontrolliertes Ausknicken derselben bei Überschreitung der Belastung, für die sie ausgelegt sind.

Die auf diese Weise hergestellten tragenden Bauteile weisen beispielsweise gegenüber Trägern aus Stahl einen entscheidenden Gewichtsvorteil auf und sind auch gegenüber Aluminiumträgem immer noch um einen Faktor 1,5 - 2 leichter. Der aus vorzugsweise gerichtetem Faserhalbzeug gewickelte Träger weist eine um einen Faktor 1,5 - 2 höhere Zugfestigkeit auf als ein hochfester Stahlträger. Bei der Verwendung des Bauteils als Träger in einem Fahrzeugschassis dient das Füllmaterial in den Hohlräumen des Bauteils im Crashfall als Energieabsorber. Als Füllmaterialien kommen physikalisch oder chemisch geschäumte Kunststoffe in Frage, die eine den Anforderungen entsprechende Temperaturbeständigkeit aufweisen und/oder schwer entflammbar sind. Alternativ oder auch in Kombination zu den Kunststoffschäumen kann auch ein Metall- oder Keramikschaum als Füllmaterial eingesetzt werden.

Die aus faserverstärktem Kunststoff gewickelten Bauteile besitzen den Vorteil der Allwettertauglichkeit und können daher, ohne Einschränkungen, das ganze Jahr über eingesetzt werden. Um den Einsatz in extrem widrigen Umwelteinflüssen physischen oder chemischen Ursprungs zu gewährleisten, kann die gewickelte Tragstruktur herkömmlich umspritzt werden. Dadurch lassen sich auf einfachste Weise Oberflächenschutz und A Klasse Oberflächenqualität vereinen. Die Temperaturfestigkeit des verwendeten Kunststoffs ist nach dem Einsatzgebiet auslegbar. Aus wirtschaftlichen Gründen erscheint eine Temperaturbeständigkeit bis etwa 180°C dabei als ausreichend. Die erfindungsgemässen tragenden Bauteile eignen sich beispielsweise für den Einsatz als Träger oder Versteifungselemente in Fahrzeugen in Leichbauweise, beispielsweise in der Kategorie bis ca. 800 kg. In dieser Kategorie sind im Crashfall Stosspartner in einem Masenverhältnis von etwa 1 : 2 bis etwa 1 : 3 zu erwarten. Derartige Fahrzeuge sind hauptsächlich im Nahbereich unterwegs und dadurch einem erhöhten Crashrisiko ausgesetzt. Die aus der Verwendung der erfindungsgemässen tragenden Bauteile als Chassisbauteile erzielbare Gewichtseinsparung erweist sich insbesondere bei dem angegebenen Einsatzgebiet als energetisch besonders günstig. Die erfindungsgemässen tragenden Bauteile sind jedoch nicht nur auf den angegebenen Einsatzzweck beschränkt. Ihre relativ einfache Konstruktion und die Auslegbarkeit ihrer Festigkeitseigenschaften lässt auch den Einsatz als Träger bei Lastkraftfahrzeugen oder generell bei Transportfahrzeugen ohne weitere Einschränkungen zu. Die tragenden Bauteile aus faserverstärktem Kunststoff sind auch aus Umweltaspekten von Vorteil. Sie können nach Ablauf der Lebensdauer, beispielsweise eines Fahrzeugs, einfach zu Granulat weiterverarbeitet werden, welches dann beispielsweise in anderen Anwendungen als Füllstoff eingesetzt werden kann. Ihre Entsorgung ist ebenfalls relativ problemlos, das die gesamte Konstruktion keinerlei umweltgefährdende Stoffe enthält.

Zur Verbesserung der Tragfestigkeit des Bauteils ist dieses zusätzlich noch verdichtet. Dies erfolgt beispielsweise bei gewickelten und mit schäumbarem Füllmaterial gefüllten Bauteilen automatisch während des Trocknens und Aufschäumens des Füllmaterials innerhalb einer abgeschlossenen Form. Beispielsweise wird dazu der Wickelkern erhitzt. Dabei wird die Schäumungsreaktion ausgelöst, die in der geschlossenen Form einen relativ grossen Druck erzeugen kann, durch den es zu der Verdichtung des Bauteils kommt.

In einer vorteilhaften Variante der Erfindung sind dic Aussengurtteile und die fachwerkartige Zwischenstruktur integral aus einem quasi-endlosen Faserhalbzeug gewickelt. Während es zwar prinzipiell möglich ist, die Aussengurtteile sowie die Zwischenstruktur separat zu wickeln und danach zusammenzurügen, beispielsweise miteinander zu verkleben, ist aus fertigungstechnischen Gründen eine integrale Herstellung der Elemente in einem Arbeitsschritt von Vorteil. Dabei wird das praktisch endlos vorliegende Faserhalbzeug nach einem vorgegebenen Ablaufschema auf den Wikkelkern gewickelt. Auf diese Weise werden die Aussengurtteile sowie die Zwischenstruktur im selben Arbeitsgang hergestellt. Ein nachträgliches Fügen der Elemente entfällt, da sie ja integral miteinander gefertigt werden und praktisch als ein einzelnes Bauteil vorliegen. Die integrale Herstellung hat massgeblich Einfluss auf die Steifigkeit des Bauteils.

Das für die Herstellung des erfindungsgemässen Bauteils eingesetzte Verfahren ist ein Faserwikkelverfahren, insbesondere ein Fasernasswickelverfahren. Dabei erweist es sich für die Festigkeit des Bauteils von Vorteil, wenn das Faserhalbzeug als ein kunstharzimprägnierter Roving von etwa 1,5 mm bis etwa 4 mm, vorzugsweise etwa 2,5 mm, Stärke vorliegt.

Das Faserhalbzeug muss nicht unbedingt nur einen einzigen Fasertyp enthalten. Aus Festigkeitsgründen kann es von Vorteil sein, wenn das Faserhalbzeug eine Kombination verschiedenartiger Faserstrukturen, beispielsweise Carbon-, Aramid- oder Glasfasern, mit vorzugsweise gleichartig ausgerichteter Faseranordnung umfasst.

Die Harzmatrix des faserverstärkten Kunststoffs kann auf duroplastischer oder thermoplastischer Basis beruhen. Die Entscheidung darüber ist abhängig von qualitativen und quantitativen Anforderungen an das Bauteil.

Der Wickelkern für die Herstellung des erfindungsgemässen tragenden Bauteils umfasst eine Anzahl von Wickelspulen, die für den Wickelvorgang lösbar auf einer Wickelplatte montiert sind. Die Wickelspulen können als Verlierteile vorliegen oder auch nach der Fertigstellung des gewickelten Bauteils entnehmbar und für die Herstellung von weiteren Bauteilen wiederverwendbar sein.

Es erweist sich von Vorteil, wenn einzelne der Wickelspulen als Verlierteile, insbesondere als Inserts ausgebildet sind. Die Inserts sind mit Anschlusseinrichtungen, beispielsweise mit Gewindebohrungen, zum Anschluss weiterer Bauteile ausgestattet.

Für die Festigkeit des aus einem faserverstärkten Kunststoff gewickelten Bauteils ist es von Vorteil, wenn das kunstharzimprägnierte Faserhalbzeug vor seiner Umlenkung möglichst lange unidirektional geführt ist. Bei dem erfindungsgemässen Bauteil sind die Wicklungen des kunstharzimprägnierten Faserhalbzeugs deshalb in der fachwerkartigen Zwischenstruktur immer über wenigstens zwei benachbarte Wickelspulen geführt, bevor seine Wickelrichtung ändert.

Für das Faserwickelverfahren sind unterschiedliche Wickelarten bekannt. So existiert beispielsweise das Kreuzwickelverfahren, bei dem die Faserrovings jeweils gekreuzt auf einen Wickelkern gewickelt werden. In der Polarwickeltechnik werden die Rovings jeweils über die Pole eines Wikkelkerns gewickelt. Diese Techniken kommen insbesondere in Verbindung mit Verlierkernen zur Anwendung. Für die Festigkeit des erfindungsgemässen tragenden Bauteils aus faserverstärktem Kunststoff erweist es sich von Vorteil, wenn das kunstharzimprägnierten Faserhalbzeug in im wesentlichen parallel verlaufenden Bahnen nebeneinander und/oder übereinander gewickelt vorliegt.

Die Aussengurtteile und die Zwischenstruktur sind in der Regel nicht homogen gewickelt. Vielmehr bietet das erfindungsgemäss ausgebildetet Bauteil die Möglichkeit, einzelne Bereiche der Aussengurtteile und der fachwerkartigen Zwischenstruktur anforderungsspezifisch mit einer unterschiedlichen Anzahl von Wicklungen zu versehen. Auf diese Weise kann das tragende Bauteil seinen späteren Anforderungen entsprechend in einzelnen Bereichen gezielt verstärkt werden, während andere Abschnitte des Bauteils mit gezielten Schwächungen versehen werden. Der Aufbau des Fachwerkes kann sowohl symmetrisch als auch asymmetrisch erfolgen. Im Fall des Einsatzes als Träger in einem Fahrzeugchassis sind auf diese Weise sehr exakt berechenbare Knautsch- und Stauchungszonen erstellbar.

Bei einem Trägerbauteil umfassen die Aussengurtteile je einen gewickelten Obergurt und einen gewickelten Untergurt, die durch die integral, fachwerkartig gewickelte Zwischenstruktur miteinander verbunden sind. Gerade diese relativ einfache, fachwerkartige Ausbildung des Trägers erlaubt eine gute Berechenbarkeit seiner Eigenschaften.

In einer Variante des Trägers, die auch quer zur Längserstreckung des Ober- und Untergurtes eine erhöhte Festigkeit aufweist, sind der Ober- und Untergurt durch zwei gewickelte Seitengurte miteinander verbunden. Neben ihrer Versteifungsfunktion bilden die Seitengurte auch eine Abdeckung für die Zwischenstruktur. Dies verhindert ein Eindringen von Fremdkörpern in die Zwischenstruktur und kann auch aus ästhetischen Gründen erwünscht sein. Aus fertigungstechnischen Gründen und der besseren Einbindung der Seitengurte in die Gesamtstruktur wegen sind die Seitengurte mit Vorteil integral mit den Ober- und Untergurten und der Zwischenstruktur gewickelt. Auf diese Weise ausgebildet, liegt das gesamte tragende Bauteil als integraler Einzelkörper vor.

In einer Variante der Erfindung sind die Aussengurtteile kreisförmig angeordnet und bilden eine im wesentlichen ringförmige Aussenfläche. Beispielsweise ist das gewickelte Bauteil eine Felge. Die Verbundfelge weist eine ausreichend hohe Festigkeit auf. Dabei ist sie deutlich leichter als vergleichbare Felgen konventioneller Stahlbauart. Selbst gegenüber Felgen aus Aluminium weist die Verbundfelge Gewichtsvorteile auf. Die kreisförmige Anordnung der Aussengurtteile, die durch eine fachwerkartig gewickelte Zwischenstruktur miteinander verbunden sind, erlaubt auch die Herstellung anderer rotationssymmetrischer Bauteile, beispielsweise Greiferräder, die zur Fertigung von Bändern, Gurten und dergleichen eingesetzt werden.

Dem Anwendungszweck entsprechend kann das Bauteil mit einer weitgehend geschlossen ausgebildeten Aussenhaut versehen sein, die ein Eindringen und eine Ablagerung von Verunreinigungen in das Innere des Bauteils verhindert.

Bei dem erfindungsgemässen Verfahren zur Herstellung eines Bauteils aus einem kunstharzimprägnierten Faserhalbzeug wird das Faserhalbzeug in einem Wickelverfahren, vorzugsweise gerichtet, auf einen Wickelkern gewickelt und danach ausgehärtet und getrocknet. Das Verfahren zeichnet sich insbesondere dadurch aus, dass bei der Wicklung des Faserhalbzeug um eine Anordnung von Wickelspulen eine Anzahl von Aussengurtteilen erstellt und wickeltechnisch integral mit einer fachwerkartig aufgebauten Zwischenstruktur gewickelt werden. Bei dem erfindungsgemässen Verfahren werden somit der Ober- und der Untergurt sowie die fachwerkartige Zwischenstruktur des gewickelten Bauteils integral, im selben Arbeitsgang aus einem quasi-unendlichen Faserhalbzeug gewickelt. Dadurch liegen die Aussengurtteile die diese verbindende Zwischenstruktur als Einzelelement vor. Die Hohlräume zwischen den Aussengurtteilen und der Zwischenstruktur werden wenigstens bereichsweise mit einem Füllmaterial gefüllt. Die konstruktive Auslegung und die Füllung der Hohlräume erhöht die Festigkeit des Bauteils insgesamt und erleichtert den Herstellungsprozess. Durch den integralen Wickelvorgang ist das Bauteil sehr einfach, den Anforderungen gemäss, ausleg- und wickelbar. Das Füllmaterial stützt die auf Druck belasteten Abschnitte der fachwerkartigen Zwischenstruktur und verhindert ein unkontrolliertes Ausknicken derselben bei Überschreitung der Belastung, für die sie ausgelegt sind.

Beim Einsatz des Bauteils als Träger im Fahrzeugbau kann das Füllmaterial u.a. die Energieaufnahme im Crashfall begünstigen und ein unkontrolliertes Ausknicken von auf Druck belasteten Zweigen der fachwerkartigen Zwischenstruktur verhindern. Als Füllmaterial wird beispielsweise ein technischer Kunststoffschaum gewählt, der physikalisch oder chemisch schäumbar ist. Alternativ dazu oder in Ergänzung kann auch ein Metall- oder Keramikschaum als Füllmaterial in die Zwischenräume eingebracht werden.

Eine zweckmässige Verfahrensvariante zur Herstellung von Bauteilen aus faserverstärktem Kunststoff, deren Festigkeit noch weiter verbessert ist, umfasst insbesondere die folgenden Verfahrensschritte:
- das quasi-endlose kunstharzimprägnierte Faserhalbzeug wird über Wickelspulen gewickelt, die für die Zwecke des Wickelvorgangs lösbar auf einer Wickelplatte befestigt werden;
- das gewickelte Bauteil wird in einer rahmenartigen Schliessform angeordnet, die sich auf der Wickelplatte abstützt und das Bauteil an den Längs- und Querseiten umschliesst;
- die Schliessform wird mit einem Deckel verschlossen, der mit verschliessbaren Einfüllöffnungen für das Füllmaterial, insbesondere einen physikalisch oder chemisch schäumbaren, technischen Schaum und/oder einen Metall oder Keramikschaum, versehen ist, um die in dem Bauteil verbleibenden Zwischenräume bei Bedarf wenigstens bereichsweise zu verfüllen;
- das gewickelte Bauteil wird beispielsweise durch Erhitzen des Wickelkerns derart erhitzt, dass das Füllmaterial expandiert, wobei das Bauteil verdichtet wird;
- das gewickelte Bauteil wird entfonnt wobei es vor oder gegebenenfalls nach der Entformung in einer Tempereinrichtung getempert wird.
   Durch die Verdichtung des Bauteils bei der geschilderten Verfahrensführung wird dieses hinsichtlich der Stöchiometrie optimiert, und seine Festigkeit wird noch zusätzlich erhöht.

Das erfindungsgemässe Verfahren zur Herstellung von faserverstärkten Bauteilen ermöglicht es, die Anzahl der über- und/oder nebeneinander erstellten Wicklungen und den Verlauf der Wicklungen über die neben- und hintereinander angeordneten Wickelspulen in Abhängigkeit von den von dem gewickelten Bauteil aufzunehmenden Kräften zu wählen. Dadurch kann das Bauteil spezifisch für die geplante Belastung ausgelegt werden. Der konstruktive Aufbau des Bauteils nach Fachwerkträgerart ermöglicht dabei eine relativ einfache Berechnung des Bauteils und der spezifischen Auslegung.

Die Wickelspulen können nach dem Wickelvorgang von dem Bauteils entfernt werden, um sie für die Herstellung weiterer Bauteil weiterzuverwenden. Es kann auch vorgesehen sein, einzelne Wikkelspulen, die als Inserts ausgebildet wurden und mit Anschlusseinrichtungen, beispielsweise Gewindebohrungen, für die Befestigung weiterer Anschlussbauteile ausgestattet wurden, derart in das gewickelten Bauteil einzubinden, dass sie einen integralen Bestandteil des Bauteils bilden.

Damit die in Längsrichtung der Fasern ausgezeichnete Festigkeit des Faserhalbzeugs im Bauteil genügend zur Geltung kommt, wird das Faserhalbzeug während des Wickelprozesses im der fachwerkartigen Zwischenstruktur jeweils über wenigstens zwei nebeneinander angeordnete Wickelspulen des Wickelkerns geführt, bevor die Längsausrichtung der Fasern durch eine Änderung der Wickelrichtung geändert wird.

Für die Festigkeit des tragenden Bauteils erweist sich ein Parallelwickelverfahren von Vorteil, bei dem das Faserhalbzeug in im wesentlichen parallel zueinander verlaufenden Wicklungen über die einzelnen Wickelspulen gewickelt wird. Kreuzungen der Wicklungen kommen auf den Wickelspulen praktisch nur bei übereinanderliegenden Wicklungsschichten vor.

Das erfindungsgemässe Verfahren kann von Hand, halbautomatisch oder vollautomatisiert durchgeführt werden. Insbesondere eignet sich das erfindungsgemässe Verfahren für CNCbahngesteuerte Wickelmaschinen, welche die Möglichkeit bieten, die Faserlage, das Wickelmuster, die Fadenspannung, das stöchiometrische Verhältnis von Fasern zur Kunstharzmatrix usw. mikroprozessorkontrolliert zu steuern und zu regeln. In Verbindung mit einem programmierbaren Maschinenrechner können die ermittelten Belastungswerte unmittelbar in Auslegungsdaten umgesetzt und für die Steuerung und Regelung der Wickelmaschine herangezogen werden.

Als Faserhalbzeug kommen bei dem erfindungsgemässen Verfahren mit Vorteil carbonisierte Naturfasern aus Flachs, Hanf oder Chinaschilf oder Carbon-, Aramid- und/oder E-Glasrovings zur Anwendung, die vorgängig oder erst unmittelbar vor dem Wickelvorgang in einer Imprägniereinrichtung mit einer duroplastischen oder thermoplastischen Matrix eines Zwei-Komponenten-Harzes getränkt werden. Die Stärkte des imprägnierten Rovings wird zu etwa 1,5 mm bis etwa 4 mm, vorzugsweise etwa 2,5 mm, gewählt.

Das Anwendungsgebiet der erfindungsgemässen, gewickelten, tragenden Bauteile erstreckt sich vom Einsatz im Fahrzeugbau über maschinenbauliche Anwendungen, den Hoch- und Tiefbau bis zu Weltraumanwendungen. Anwendungen finden sich überall dort, wo eine Leichtbauweise erforderlich oder erwünscht ist. Als besonderes Verwendungsgebiet wird dabei der Fahrzeugbau herausgestrichen, wo der erfindungsgemässe Aufbau der Bauteile und das Herstellungverfahren eine einfache Auslegung der Bauteile für den Einsatz als Crashelemente im Chassisbau ermöglicht. Im Fall von Trägern wird das Bauteil mit einem gewickelten Ober- und einem gewickelten Untergurt hergestellt, die durch eine integral gewickelte, fachwerkartige Zwischenstruktur miteinander zu einer Einheit verbunden sind. In einer alternativen Ausführungsvariante wied wickeltechnisch eine Anzahl von Aussengurtteilen hergestellt, die kreisförmig angeordnet sein. Dabei wechseln sie am Kreisumfang mit grossen Wickelspulen ab. Das kunstharzimprägnierte Faserhalbzeug wird dabei vor und nach dem Wickeln eines Aussengurteils über jeweils eine grosse Wickelspule geführt. Zwischen dem Wickeln über zwei am Umfang angeordnete grosse Wickelspulen wird das Faserhalbzeug jeweils durch einen Abschnitt der fachwerkartigen Zwischenstruktur geführt.

Im Folgenden wird die Erfindung unter Bezugnahme auf die Figuren näher erläutert. Es zeigen in nicht massstabsgetreuer Darstellung:
- Fig. 1: eine schematische Prinzipdarstellung des Wickelverfahrens;
- Fig. 2: eine schematische Darstellung der Komponenten einer Wickelanlage;
- Fig. 3: einen Grundaufbau eines Beispiels eines Wickelbauteils mit angedeutetem Wicklungsverlauf;
- Fig. 4: eine teilweise auseinandergezogene Darstellung eines Wickelbauteils mit für die Durchführung des Herstellungsverfahrens benötigten Elementen;
- Fig. 5: ein Ausführungsbeispiel eines entformten Bauteils; und
- Fig. 6: ein Ausführungsbeispiel für ein rotationssymmetrisches Wickelbauteil mit angedeutetem Wicklungsverlauf.

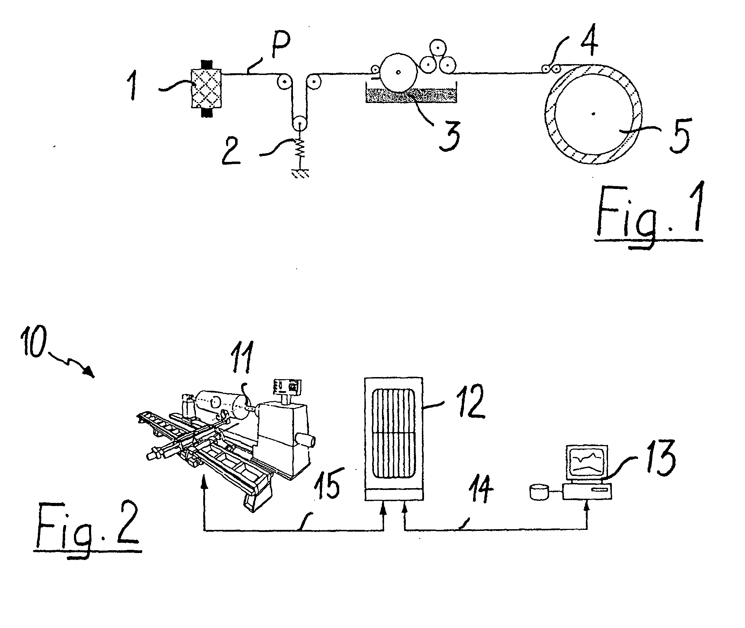

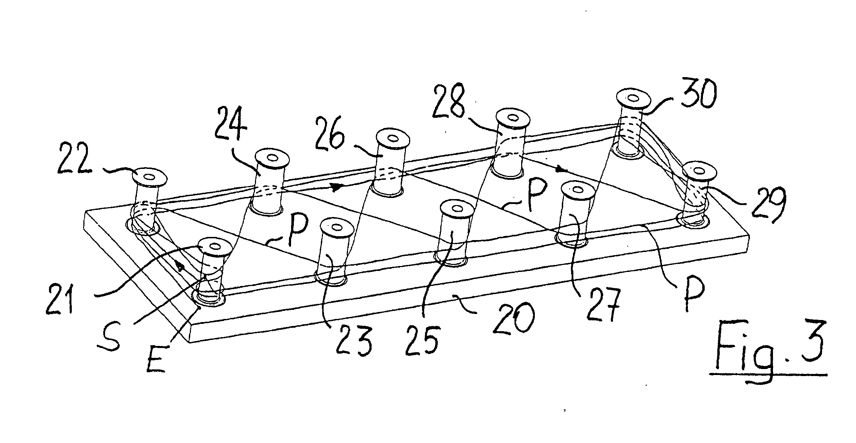

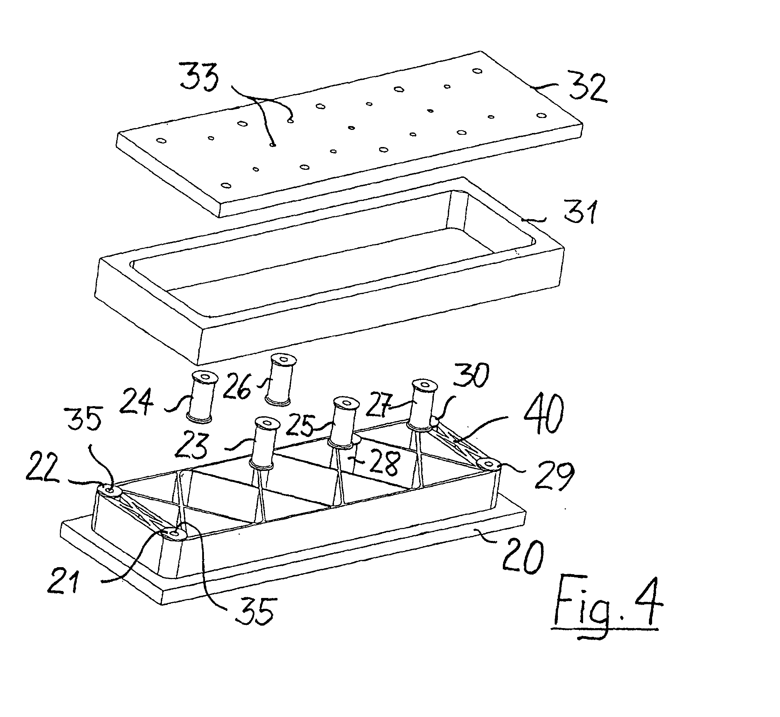

Fig. 1 zeigt schematisch ein als Fasemasswickelverfahren bekanntes Verfahren, das bevorzugt zur Herstellung der erfindungsgemässen Bauteile aus faserverstärktem Kunststoff zum Einsatz kommt. Dabei wird ein von einer Spanneinheit 2 unter Vorspannung gehaltenes Faserhalbzeug P von einer Vorratsspule 1 abgezogen und durch eine Inprägniereinheit 3 geführt. Die Imprägniereinheit 3 kann als Tauchtränkvorrichtung oder, wie beispielsweise dargestellt, als Walzenimprägniervorrichtung ausgebildet sein. Dem Fachmann sind die verschiedenen Formen von Imprägniereinheiten hinlänglich bekannt, sodass auf eine nähere Erläuterung verzichtet werden kann. Das in der Imprägniereinheit 3 mit einem Kunstharzsystem imprägnierte Faserhalbzeug P wird anschliessend mittels einer Führungseinheit 4, die mit einer rechnergesteuerten Wickelmaschine verbunden ist, auf einem mit der Führungseinheit 4 synchronisiert rotierenden Wickelkern 5 abgelegt. Danach wird der Wickelkörper getrocknet. Das Faserhalbzeug umfasst beispielsweise direktionierte Carbon-, Aramid- oder Glasfasern als Einzelfasern oder, je nach Erfordernis, in beliebiger Kombination miteinander und liegt als Roving mit einer Stärke von etwa 1,5 mm bis etwa 4 mm, vorzugsweise 2,5 mm, vor. Es können auch carbonisierte Naturfasern aus Flachs, Hanf oder Chinaschilf eingesetzt werden. Das Kunstharz ist mit Vorteil ein thermoplastisches oder duroplastisches 2-Komponenten-Harz,

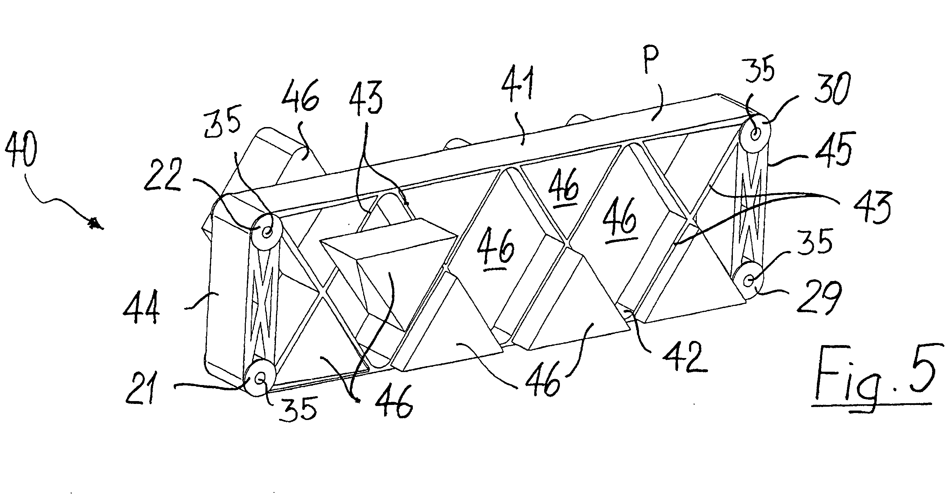

Fig. 2 zeigt ein Beispiel einer Wickelanlage 10, insbesondere einer rechnergesteuerten CNC-Wickelanlage. Diese umfasst eine Wickelmaschine 11, einen Maschinensteuerung 12 und einen Maschinenrechner 13. Die Wechselwirkung der einzelnen Anlagenkomponenten miteinander ist durch die Doppelpfeile 14 und 15 verdeutlicht. Der Maschinenrechner 13 dient zur Echtzeit-Regelung der Maschine und zur Echtzcit-Verwaltung der Steuerdaten im Steuermodus. Er erlaubt eine Programmierung, Verwaltung und graphische Darstellung der Steuerdaten im Programmmodus. Darüber hinaus ist es über den Maschinenrechner möglich, die Steuerdaten, beispielsweise die Drehzahl des Wickelkerns, zu optimieren. Die Maschinensteuerung 12 der Wickelanlage 10 ist veranwortlich für die Regelung, Steuerung und die Kommunikation. Für die Regelung des Wickelablaufs, insbesondere der Wickelbahnachsen, wird der zeitliche Istwert-Verlauf der Achsenpositionen laufend einem vorprogrammierten bzw. zuvor errechneten Sollwert-Verlauf angepasst. Die Maschinensteuerung steuert bzw. regelt auch laufend weitere relevante Prozessparameter, beispielsweise die Fadenspannung des Faserhalbzeugs. Die Kommunikationsfunktion ermöglicht einen Datenaustausch zwischen der Wickelmaschine 11 und dem Maschinenrechner 13. Die Wikkelmaschine 10 ist bevorzugt als Drehwickelmaschine mit einer Drehachse für den Wickelkopf, einem in der Ebene verstellbaren Schlitten und einer Zustellachse ausgebildet. Die Elemente der Wickelmaschine besitzen die erforderliche Anzahl von Bewegungsfreiheitsgraden, damit Bauteile der gewünschten Art wickelbar sind. Für die Herstellung etwas komplexerer Bauteile sind bevorzugt sechs Bewegungsfreiheitsgrade vorgesehen.

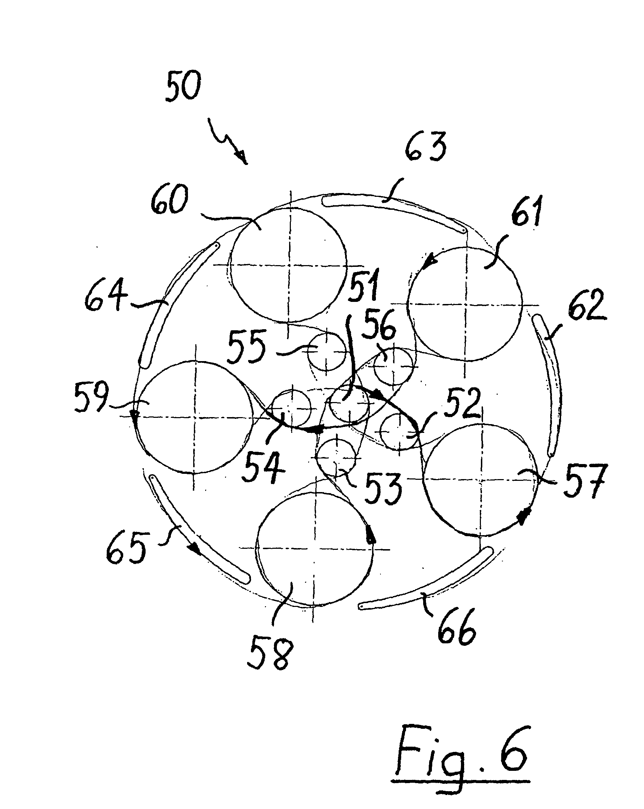

Fig. 3 zeigt eine Ausgangssituation für die Herstellung eines erfindungsgemässen Bauteils. Dabei ist eine Anzahl von Wickelspulen, die mit den Bezugszeichen 21 - 30 durchnumeriert sind, nebenund hintereinander auf einer Wickelplatte 20 montiert. Die Wickelplatte 20 bildet dabei einen Bestandteil des Wickelkerns 5 (Fig. 1). Die Wickelspulen 21 - 30 können aus Metall oder aus Kunststoff sein. Das von der Vorratsspule als Roving abgezogene, imprägnierte Faserhalbzeug P wird nach einem vorgegebenen Wickelplan auf die Wickelspulen 21 - 30 abgelegt. Der Wickelplan richtet sich dabei nach den im Maschinenrechner abgelegten Steuerdaten, die vorzugsweise in Abhängigkeit von der zu erwartenden Belastung des herzustellenden Bauteils ermittelt wurde. Ein derartiger Wickelplan kann beispielsweise durch die Angabe der hintereinander anzufahrenden Wickelspulen festgelegt werden. Beispielsweise könnte ein derartiger Wickelplan den folgenden Verlauf aufweisen: S; 21; 23; 26; 28; 29; 30; 29; 30; 28; 25; 23; 22; 21; 22; 21; 24; 26; 27; 29; 30; 27; 25; 24; 22; 21; 23; 25; 27; 29; 30; 28; 26; 24; 22; 21; usw.; E. Dabei bezeichnen S den Anfang des abgelegten Rovings P, die Bezugszeichen die in Wickelrichtung aufeinanderfolgenden Wickelspulen und E das Ende des Rovings P. Der angegebene Wickelplan dient nur zur Erläuterung des Wickelablaufs und stellt daher kein zwingendes Schema dar. Vielmehr ist je nach der zu erstellenden Bauteilgeometrie jeweils ein neuer Wickelplan festzulegen. Dabei ist zu berücksichtigen, dass für eine möglichst hohe Belastbarkeit der Roving möglichst lange direktioniert geführt wird, bevor die Wickelrichtung und damit die Direktionierung der Fasern geändert wird.

Fig. 4 zeigt den apparativen Aufbau für einen weiteren vorteilhaften Verfahrenschritt bei der Herstellung eines erfindungsgemässen, tragenden Bauteils aus faserverstärktem Kunststoff. Das fertig gewickelte Bauteil ist gesamthaft mit dem Bezugszeichen 40 versehen. In der Darstellung ist angedeutet, dass einzelne der Wickelspulen 21 - 30 als Verlierteile ausgebildet sein können. Diese verbleiben im gewickelten Bauteil und bilden einen integralen Bestandteil. Beispielsweise können sie als Inserts 21, 22, 29, 30 ausgebildet sein, die mit Gewindebohrungen 35 zum Anschluss weiterer Bauelemente an das Bauteil 40 ausgestattet sind. Die übrigen Wickelspulen 23 - 28 können vom Bauteil 40 entnehmbar sein, um sie für die Herstellung weiterer gewickelter Bauteile weiterzuverwenden. Das fertig gewickelte Bauteil 40 ist in Fig. 4 immer noch auf der Wickelplatte 20 angeordnet. Für den nächsten Verfalwensschritt wird es von einer rahmenartigen Schliessform 31 umgeben, deren Innenkontur auf die Form des Bauteils abgestimmt ist. Die Schliessform 31 stützt sich auf der Wickelplatte 20 ab und ist durch einen Deckel 32 verschliessbar. Der Deckel ist mit Bohrungen und verschliessbaren Einfüllöffnungen 33 versehen, durch die ein Füllmaterial in die im gewickelten Bauteil 40 verbleibenden Hohlräume einfüllbar ist. Als Füllmaterial wird bevorzugt ein physikalisch oder chemisch aufschäumbarer technischer Kunststoff oder ein Metall- oder Keramikschaum eingesetzt. Durch die Expansion des Füllmaterials während des Trocknens des Bauteils 40 in der verschlossenen Schliessform 31 erfolgt eine Verdichtung der Wicklungen. Dadurch wird die Festigkeit des gewickelten Bauteils 40 noch weiter erhöht. Nach der Verdichtung wird das Bauteil 40 in der Schliessform oder nach seiner Entformung getempert.

Fig. 5 zeigt ein Ausführungsbeispiel eines fertig gewickelten und entformten Bauteils 40. Das Bauteil umfasst einen Obergurt 41 und einen Untergurt 42, die durch eine fachwerkartig aufgebaute Zwischenstruktur 43 einstückig miteinander verbunden sind. An seinen Längsenden besitzt das Bauteil 40 jeweils einen Seitengurt 44, 45 der ebenfalls integral mit den Ober- und Untergurten 41, 42 und der fachwerkartigen Zwischenstruktur 43 gewickelt ist. In die Seitengurte 44, 45 eingebunden sind die Inserts 21, 22 bzw. 29, 30, die jeweils mit Gewindebohrungen 35 zum Anschluss weiterer Strukturelemente ausgestattet sind. Das die Zwischenräume zwischen den Ober- und Untergurten 42, 42 und der Zwischenstruktur 43 ausfüllende, geschäumte Füllmaterial ist mit dem Bezugszeichen 46 versehen. Zur Verdeutlichung sind die geschäumten Füllkörper 46 verschieden weit eingesetzt dargestellt. Die Wandstärken der Ober- und Untergurte 41, 42, der Seitengurte 44, 45 sowie der fachwerkartigen Zwischenstruktur 43 können je nach der zu erwartenden Belastung des Bauteils, gemäss der berechneten Auslegung bereichsweise unterschiedlich ausgebildet sein. Dies kann durch eine unterschiedliche Wicklungsdichte erreicht werden. Dadurch kann das Bauteil aus faserverstärktem Kunststoff hinsichtlich seines späteren Einsatzes massgeschneidert werden. Beispielsweise können gezielt geschwächte Bereiche eingebaut werden, um beim Einsatz des Bauteils in einem Fahrzeugchassis eine Knautschzone zu realisieren. Als Abdeckung gegenüber Verschmutzungen kann das Bauteil 40 noch mit einer Aussenhaut, beispielsweise einer aufgespritzten Kunststoffhaut versehen sein. Um den Einsatz in extrem widrigen Umwelteinflüssen physischen oder chemischen Ursprungs zu gewährleisten, kann die gewickelte Tragstruktur herkömmlich umspritzt werden. Dadurch lassen sich auf einfachste Weise Oberflächenschutz und A Klasse Oberflächenqualität vereinen.

Das in Fig. 6 angedeutete Wickelbauteil ist im wesentlichen rotationssymmetrisch aufgebaut und trägt gesamthaft das Bezugszeichen 50. Dabei zeigt die Darstellung ein ringförmig angeordnetes Profil, bei dem am Umfang angeordnete grosse Wickelspulen 57 - 61 mit Aussengurtteilen 62 - 66 abwechseln. Die Aussengurtteile 62 - 66 sind dabei vorzugsweise auf kreissegmentartig gekrümmte Aussenformteile gewickelt. Die fachwerkartige Zwischenstruktur weist Wickelspulen 51 - 56 auf. Der Wickelablauf kann beispielsweise den folgenden Verlauf aufweisen: von der im Zentrum befindlichen Wickelspule 51 wird das Faserhalbzeug P, beispielsweise ein imprägnierte Gewebeband, zur Wickelspule 52 und von dort auf die am Umfang befindliche grosse Wickelspule 57 geführt. Die grosse Wickelspule 57 wird vorzugsweise umwickelt bevor das Gewebeband P zu dem kreissegmentartig gekrümmten Aussenformteil zur Bildung des Aussengurtteils 62 geleitet wird, um dieses gewickelt und zur nächsten grossen Wickelspule 61 geführt wird. Im Anschluss an die grosse Wickelspule 61 wird das Gewebeband P wieder in die fachwerkartige Zwischenstruktur geführt, wo es zunächst unidirektional über die Wickelspulen 56 und 51 geführt wird, bevor seine Wickelrichtung in Richtung auf die Wickelspule 54 geändert wird. Von der Wickelspule 54 gelangt das Gewebeband P zu am Umfang angeordenten grossen Wickelspule 59. Diese wird vorzugsweise wenigstens einmal umrundet, bevor das Gewebeband P auf das Aussenformteil für das Aussengurtteil 64 geleitet wird. Im Anschluss an das Aussengurtteil 64 wird das Gebebeband P um die benachbarte grosse Wickelspule 58 geführt, bevor es wieder zu den Wickelspulen in der fachwerkartigen Zwischenstruktur geleitet wird, usw. Auf diese Weise ist sichergestellt, dass das Gewebeband immer abwechselnd über einen Abschnitt des Umfangs und die Zwischenstruktur geführt wird. Am Umfang wird das Gewebeband P immer über zwei grosse Wickelspulen und ein dazwischen angeordnetes Aussengurtteil geführt. In der Zwischenstruktur wird das Gewebeband immer zunächst über zwei benachbarte Wickelspulen geführt bevor seine Wickelrichtung ändert. Zusammengefasst ergibt sich daraus beispielsweise die folgende Wickelabfolge: 51-52-57 62-61-56-51-54-59-64-58,53-51-56-61-63-60-55-51-53-58-66-57-52-51-55-60-64-59-54-51-usw. Als Gewebeband kommen neben Rovings mit direktionierten Fasern auch gewobene, geflochtene, gestrickte oder in einer anderern Art vernetzte Fäden, aber auch wirre Fliessbänder zur Anwendung.

## Patentansprüche

1. Bauteil aus faserverstärktem Kunststoff, bei dem ein kunstharzharzimprägniertes Faserhalbzeug (P), vorzugsweise in mehreren Schichten, mit vorzugsweise direktionierten Fasern um einen Wickelkern (5) gewickelt ist, **dadurch gekennzeichnet, dass** das Bauteil (40; 50) als tragendes Element ausgebildet ist und gewickelte Aussengurtteile umfasst, die über eine fachwerkartig gewickelte Zwischenstruktur miteinander verbunden sind, wobei die Hohlräume zwischen den Aussengurtteilen (41, 42) und der Zwischenstruktur (43) wenigstens bereichsweise mit einem Füllmaterial (46) gefüllt sind.

2. Bauteil nach Anspruch 1, **dadurch gekennzeichnet, dass** das Füllmaterial (46) ein physikalisch oder chemisch schäumbarer Kunststoff oder ein Metall- oder Keramikschaum ist.

3. Bauteil nach Anspruch 2, **dadurch gekennzeichnet, dass** das gewickelte und mit einem schäumbaren Füllmaterial gefüllte Bauteil (40) verdichtet ist.

4. Bauteil nach einem der vorangehenden Ansprüche, **dadurch gekennzeichnet, dass** die Aussengurtteile (41, 42) und die fachwerkartige Zwischenstruktur (43) integral aus einem quasi-endlosen Faserhalbzeug (P) gewickelt sind.

5. Bauteil nach einem der vorangehenden Ansprüche, **dadurch gekennzeichnet, dass** das Faserhalbzeug (P) einen kunstharzimprägnierten Roving von etwa 1,5 mm bis etwa 4 mm, vorzugsweise etwa 2,5 mm Stärke, umfasst.

6. Bauteil nach einem der vorangehenden Ansprüche, **dadurch gekennzeichnet, dass** das Faserhalbzeug (P) eine Kombination verschiedenartiger Faserstrukturen mit vorzugsweise gleichartig ausgerichteten Fasern umfasst.

7. Bauteil nach einem der vorangehenden Ansprüche, **dadurch gekennzeichnet, dass** das für die Imprägnierung verwendete Kunstharz duroplastisch oder thermoplastisch ist,

8. Bauteil nach einem der vorangehenden Ansprüche, **dadurch gekennzeichnet, dass** der Wickelkern (5) eine Anzahl von Wickelspulen (21 - 30) umfasst, die für den Wickelvorgang lösbar auf einer Wickelplatte (20) montiert sind.

9. Bauteil nach Anspruch 8, **dadurch gekennzeichnet, dass** einzelne der Wickelspulen (21, 22, 29, 30) als Inserts mit Anschlusseinrichtungen (35), beispielsweise Gewindebohrungen, für weitere Anschlussbauteile ausgebildet sind.

10. Bauteil nach Anspruch 8 oder 8, **dadurch gekennzeichnet, dass** das kunststoffimprägnierte Faserhalbzeug (P) im Bereich der fachwerkartigen Zwischenstruktur wenigstens über zwei benachbarte Wickelspulen geführt ist, bevor seine Wickelrichtung ändert.

11. Bauteil nach einem der vorangehenden Ansprüche, **dadurch gekennzeichnet, dass** das kunstharzimprägnierte Faserhalbzeug (P) in im wesentlichen parallel verlaufenden Bahnen nebeneinander und/oder übereinander gewickelt vorliegt.

12. Bauteil nach einem der vorangehenden Ansprüche, **dadurch gekennzeichnet, dass** Bereiche der Aussengurtteile (41, 42) und der fachwerkartigen Zwischenstruktur (43) eine anforderungsspezifisch verschiedene Anzahl von Wicklungen aufweisen.

13. Bauteil nach einem der vorangehenden Ansprüche, **dadurch gekennzeichnet, dass** die Aussengurtteile einen gewickelten Ober- und Untergurt (41, 42) umfassen, die durch die fachwerkartige Zwischenstruktur (43) miteinander verbunden sind.

14. Bauteil nach Anspruch 13, **dadurch gekennzeichnet, dass** der Ober- und Untergurt (41, 42) durch zwei gewickelte Seitengurte (44, 45) miteinander verbunden sind.

15. Bauteil nach Anspruch 14, **dadurch gekennzeichnet, dass** die Seitengurte (44, 45) integral mit dem Ober- und Untergurt (41, 42) und der Zwischenstruktur (43) gewickelt sind.

16. Bauteil nach einem der Ansprüche 1 - 12, **dadurch gekennzeichnet, dass** die Aussengurtteile (62-66) kreisförmig angeordnet sind und eine im wesentlichen ringförmige Aussenfläche eines im wesentlichen rotationssymmetrischen Objekts (50) bilden.

17. Bauteil nach einem der vorangehenden Ansprüche, **dadurch gekennzeichnet, dass** es mit einer weitgehend geschlossen ausgebildeten Aussenhaut versehen ist.

18. Verfahren zur Herstellung eines Bauteils (40) aus einem kunstharzimprägnierten Faserhalbzeug (P), bei dem das Faserhalbzeug (P) in einem Wickelverfahren, vorzugsweise gerichtet, auf einen Wickelkern (5) gewickelt und danach ausgehärtet und getrocknet wird, **dadurch gekennzeichnet, dass** das Faserhalbzeug (P) um eine Anordnung von Wickelspulen (21 - 30) gewickelt wird, wobei Aussengurtteile erstellt und wickeltechnisch integral mit einer fachwertig aufgebauten Zwischenstruktur (43) gewickelt werden und die Hohlräume zwischen den Aussengurtteilen (41, 42) und der Zwischenstruktur (43) wenigstens bereichsweise mit einem Füllmaterial (46) ausgefüllt werden.

19. Verfahren nach Anspruch 18, **dadurch gekennzeichnet, dass** die Zwischenräume zwischen den Aussengurtteilen (41, 42) und der Zwischenstruktur (43) wenigstens bereichsweise mit einem Füllmaterial (46) gefüllt, vorzugsweise mit einem technischen Kunststoffschaum oder einem Metall- oder Keramikschaum geschäumt wird.

20. Verfahren nach Anspruch 19, **dadurch gekennzeichnet, dass** das kunstharzimprägnierte Faserhalbzeug (P) über Wickelspulen (21 - 30) gewickelt wird, die für die Zwecke des Wickelvorgangs lösbar auf einer Wickelplatte (20) befestigt werden, dass das gewickelte Bauteil (40) in einer rahmenartigen Schliessform (31) angeordnet wird, die sich auf der Wickelplatte (20) abstützt und das Bauteil (40) umschliesst, dass die Schliessform (31) mit einem Deckel (32) verschlossen wird, wobei der Deckel (32) mit verschliessbaren Einfüllöffnungen (33) für das Füllmaterial (46), insbesondere einen physikalisch oder chemisch schäumbaren, technischen Schaum, versehen ist, um die in dem Bauteil (40) verbleibenden Zwischenräume bei Bedarf wenigstens bereichsweise zu verfällen, dass das gewickelte Bauteil (40) beispielsweise durch Erhitzen des Wickelkerns derart erwärmt wird, dass das Füllmaterial expandiert, wobei das Bauteil verdichtet wird, bevor es entformt wird, und dass das gewickelte Bauteil (40) vor oder gegebenenfalls nach der Entformung in einer Tempereinrichtung getempert wird.

21. Verfahren nach einem der Ansprüche 18 - 20, **dadurch gekennzeichnet, dass** die Anzahl der über- und/oder nebeneinander erstellten Wicklungen und der Verlauf der Wicklungen über die neben- und hintereinander angeordneten Wickelspulen (21 - 30) in Abhängigkeit der von dem gewickelten Bauteil (40) aufzunehmenden Kräfte gewählt wird.

22. Verfahren nach einem der Ansprüche 18 - 21, **dadurch gekennzeichnet, dass** einzelne der Wickelspulen (21, 22, 29, 30) als Inserts gewählt werden, die mit Anschlusseinrichtungen (35), beispielsweise Gewindebohrungen, für die Befestigung weiterer Anschlussbauteile ausgestattet werden

23. Verfahren nach Anspruch 20 - 22, **dadurch gekennzeichnet, dass** das Faserhalbzeug (P) in der fachwerkartigen Zwischenstruktur jeweils über wenigstens zwei nebeneinander angeordnete Wickelspulen des Wickelkerns geführt wird, bevor die Längsausrichtung der Fasem durch Änderung der Wickelrichtung geändert wird.

24. Verfahren nach einem der Ansprüche 20 - 23, **dadurch gekennzeichnet, dass** das Faserhalbzeug (P) in im wesentlichen parallel zueinander verlaufenden Wicklungen über eine Wickelspule gewickelt wird.

25. Verfahren nach einem der Ansprüche 18 - 24, **dadurch gekennzeichnet, dass** das Wickelverfahren automatisiert durchgeführt wird.

26. Verfahren nach einem der Ansprüche 18 - 25, **dadurch gekennzeichnet, dass** als Faserhalbzeug carbonisierte Naturfasern aus Flachs, Hanf oder Chinaschilf oder Carbon-, Aramid- und/oder E-Glasrovings getränkt mit einer duroplastischen oder thermoplastischen Matrix eines Zwei-Komponenten-Harzes einer Stärke von etwa 1,5 mm bis etwa 4 mm, vorzugsweise etwa 2,5 mm, verwendet werden.

27. Verfahren nach einem der Ansprüche 18 - 26, **dadurch gekennzeichnet, dass** ein Oberund ein Untergurt (41, 42) erstellt und wickeltechnisch integral mit der fachwerkartig aufgebauten Zwischenstruktur (43) gewickelt werden.

28. Verfahren nach einem der Ansprüche 18 - 26, **dadurch gekennzeichnet, dass** wickeltechnisch eine Anzahl von Aussengurtteilen (62-66) hergestellt wird, die kreisförmig angeordnet sind und am Kreisumfang abwechselnd mit grossen Wickelspulen (57-61) angeordnet werden, wobei das kunstharzimprägnierte Faserhalbzeug (P) vor und nach dem Wickeln eines Aussengurteils über jeweils eine grosse Wickelspule gerührt wird und zwischen dem Wickeln über zwei am Umfang angeordnete grosse Wickelspulen jeweils cin Abschnitt der fachwerkartigen Zwischenstruktur (51-56) gewickelt wird.

29. Verwendung eines tragenden Bauteils (40; 50) gemäss einem der Patentansprüche 1 - 17 als Träger und/oder Versteifungselement für Fahrzeuge, wie beispielsweise Personenkraftwagen oder Lastkraftwagen in Leichtbauweise, oder als Greiferrad, Radfelge oder dergleichen.

## Claims

1. A component of fiber-reinforced plastic, in which a synthetic-resin-impregnated semi-finished fiber product (P) is wound, preferably in multiple layers, with preferably directional fibers about a winding core (5), **characterized in that** the component (40; 50) is embodied as a load-bearing element and includes wound outer belt elements, which are joined to one another via an intermediate structure wound in trelliswork-like fashion, the voids between the outer belt elements (41, 42) and the intermediate structure (43) being filled at least in some regions with a filler material (46).

2. The component of claim 1, **characterized in that** the filler material (46) is a physically or chemically foamable plastic or a metal or ceramic foam.

3. The component of claim 2, **characterized in that** the wound component (40), filled with a foamable filler material, is compacted.

4. The component of one of the foregoing claims, **characterized in that** the outer belt elements (41, 42) and the trelliswork-like intermediate structure (43) are wound integrally from a quasi-endless semi-finished fiber product (P).

5. The component of one of the foregoing claims, **characterized in that** the semi-finished fiber product (P) includes a synthetic-resin-impregnated roving approximately 1.5 mm to approximately 4 mm and preferably approximately 2.5 mm thick.

6. The component of one of the foregoing claims, **characterized in that** the semi-finished fiber product (P) includes a combination of different kinds of fiber structures, with preferably identically oriented fibers.

7. The component of one of the foregoing claims, **characterized in that** the synthetic resin used for the impregnation is pressure-setting or thermoplastic.

8. The component of one of the foregoing claims, **characterized in that** the winding core (5) includes a number of winding spools (21, 30), which for the winding process are mounted detachably on a winding plate (20).

9. The component of claim 8, **characterized in that** individual ones of the winding spools (21, 22, 29, 30) are embodied as inserts with connection devices (35), for instance threaded bores, for further connection components.

10. The component of claim 8 or 6, **characterized in that** the plastic-impregnated semi-finished fiber product (P), in the region of the trellis work-like intermediate structure, is guided over at least two adjacent winding spools before it changes its winding direction.

11. The component of one of the foregoing claims, **characterized in that** the synthetic-resin-impregnated semi- finished fiber product (P) is in the form of essentially parallel-extending strips wound side by side and/or one over the other.

12. The component of one of the foregoing claims, **characterized in that** regions of the outer belt elements (41, 42) and of the trelliswork-like intermediate structure (43) have a requirement-specific different number of windings.

13. The component of one of the foregoing claims, **characterized in that** the outer belt elements include a wound upper and lower belt (41, 42), which are joined to one another by the trelliswork-like intermediate structure (43).

14. The component of claim 13, **characterized in that** the upper and lower belt (41, 42) are joined to one another by two wound side belts (44, 45).

15. The component of claim 14, **characterized in that** the side belts (44, 45) are wound integrally with the upper and lower belt (41, 42) and the intermediate structure (43).

16. The component of one of claims 1-12, **characterized in that** the outer belt elements (62, 66) are disposed in circular form and form a substantially annular outer surface of a substantially rotationally symmetrical object (50).

17. The component of one of the foregoing claims, **characterized in that** it is provided with an outer skin embodied in substantially closed fashion.

18. A method for producing a component (40) from a synthetic-resin-impregnated semi-finished fiber product (P), in which the semi-finished fiber product (P) is wound, preferably in oriented fashion, in a winding process onto a winding core (5) and then hardened and dried, **characterized in that** the semi-finished fiber product (P) is wound around an arrangement of winding spools (21, 30), and outer belt elements are made and wound integrally in terms of winding technique with an intermediate structure (43) embodied in trelliswork-like fashion, and the voids between the outer belt elements (41, 42) and the intermediate structure (43) are filled at least in some regions with a filler material (46).

19. The method of claim 18, **characterized in that** the interstices between the outer belt elements (41, 42) and the intermediate structure (43) are filled at least in some regions with a filler material (46), preferably being foamed with a technical plastic foam or a metal or ceramic foam.

20. The method of claim 19, **characterized in that** the synthetic-resin-impregnated semi-finished fiber product (P) is wound over winding spools (21-30), which for the purposes of the winding operation are secured detachably to a winding plate (20); that the wound component (40) is disposed in a framelike closing form (31) which is braced on the winding plate (20) and encloses the component (40); that the closing form (31) is closed with a cap (32), and the cap (32) is provided with closable fill openings (33) for the filler material (46), in particular a physically or chemically foamable technical foam, in order at least in some regions, as needed, to fill the interstices remaining in the component (40); that the wound component (40) is heated, for instance by heating the winding core, in such a way that the filler material expands, and the component is compacted before being unmolded; and that the wound component (40) is tempered in a tempering device before or optionally after the unmolding.

21. The method of one of claims 18-20, **characterized in that** the number of windings made one over the other and/or side by side and the course of the windings along the winding spools (21-30) disposed side by side and one after the other is selected as a function of the forces to be absorbed by the wound component (40).

22. The method of one of claims 18-21, **characterized in that** individual ones of the winding spools (21, 22, 29, 30) are selected as inserts, which are equipped with connection devices (35), such as threaded bores, for securing further connection components.

23. The method of claims 20-22, **characterized in that** the semi-finished fiber product (P) in the trelliswork-like intermediate structure is guided in each case over at least two winding spools, disposed side by side, of the winding core, before the longitudinal orientation of the fibers is changed by changing the winding direction.

24. The method of one of claims 20-23, **characterized in that** the semi-finished fiber product (P) is wound in essentially parallel-extending windings over a winding spool.

25. The method of one of claims 18-24, **characterized in that** the winding process is performed in automated fashion.

26. The method of one of claims 18-25, **characterized in that** as the semi-finished fiber product, carbonized natural fibers of flax, hemp or Chinese reed or carbon, aramide and/or elastic glass rovings, saturated with a pressure-setting or thermoplastic matrix of a two-component resin in a thickness of approximately 1.5 mm to approximately 4 mm, preferably approximately 2.5 mm, are used.

27. The method of one of claims 18-26, **characterized in that** one upper belt and one lower belt (41, 42) are made and wound by winding technology integrally with the intermediate structure (43) constructed in trelliswork-like fashion.

28. The method of one of claims 18-26, **characterized in that** by winding technology, a number of outer belt elements (62-66) is produced, which are disposed in a circle and disposed in alternation along the circumference of the circle with large winding spools (57-61), and the synthetic- resin-impregnated semi-finished fiber product (P), before and after the winding of an outer belt element, is guided in each case over a large winding spool, and between the winding, in each case one portion of the trelliswork-like intermediate structure (51-56) is wound over two large winding spools disposed on the circumference.

29. The use of a load-bearing component (40; 50) of one of claims 1-17 as a bearer and/or reinforcing element for vehicles, such as passenger cars or trucks of lightweight construction, or as a carrier wheel, wheel rim, or the like.

## Revendications

1. Composant en matière plastique renforcée par des fibres pour lequel un demi-produit imprégné de résine synthétique (P), de préférence en plusieurs couches, est enroulé avec des fibres de préférence directionnées autour d'un noyau d'enroulement (5), **caractérisé en ce que** le composant (40 ; 50) est configuré comme un élément porteur et comprend des parties de membrure extérieure enroulées qui sont reliées l'une à l'autre par une structure intermédiaire enroulée à la manière d'un treillis, les espaces creux entre les parties de membrures intermédiaire (41, 42) et la structure intermédiaire (43) étant remplis au moins par zones avec une matière de remplissage (46).

2. Composant selon la revendication 1, **caractérisé en ce que** la matière de remplissage (46) est une matière plastique moussant physiquement ou chimiquement ou une mousse de métal ou de céramique.

3. Composant selon la revendication 2, **caractérisé en ce que** le composant (40) enroulé et rempli d'une matière de remplissage moussante est comprimé.

4. Composant selon l'une des revendications précédentes, **caractérisé en ce que** les parties de membrure extérieure (41, 42) et la structure intermédiaire de type treillis (43) sont enroulées de manière intégrée à partir d'un produit demi-fini en fibres quasi sans fin (P).

5. Composant selon l'une des revendications précédentes, **caractérisé en ce que** le produit demi-fini en fibres (P) comprend un stratifil imprégné de résine synthétique d'une épaisseur d'environ 1,5 mm à environ 4 mm, de préférence de 2,5 mm.

6. Composant selon l'une des revendications précédentes, **caractérisé en ce que** le produit demi-fini en fibres (P) comprend une combinaison de structures de fibres de différents types avec des fibres de préférence orientées de la même manière.

7. Composant selon l'une des revendications précédentes, **caractérisé en ce que** la résine synthétique utilisée pour l'imprégnation est duroplastique ou thermoplastique.

8. Composant selon l'une des revendications précédentes, **caractérisé en ce que** le noyau d'enroulement (5) comprend un certain nombre de bobines d'enroulement (21 - 30) qui sont montées détachables sur une plaque d'enroulement (20) pour le processus d'enroulement.

9. Composant selon la revendication 8, **caractérisé en ce que** quelques-unes des bobines d'enroulement (21), 22, 29, 30) sont configurées comme des inserts avec des dispositifs de raccord (35), par exemple des forures filetées, pour d'autres composants de raccord.

10. Composant selon la revendication 8 ou 9, **caractérisé en ce que** le produit demi-fini en fibres (P) est guidé dans la zone de la structure intermédiaire de type treillis au moins par deux bobines d'enroulement voisines avant de changer son sens d'enroulement.

11. Composant selon l'une des revendications précédentes, **caractérisé en ce que** le produit demi-fini imprégné de résine synthétique (P) est présent enroulé en lés substantiellement parallèles l'un à côté de l'autre et/ou l'un au-dessus de l'autre.

12. Composant selon l'une des revendications précédentes, **caractérisé en ce que** des zones des parties de membrure extérieure (41, 42) et de la structure intermédiaire de type treillis (43) présentent un nombre d'enroulements différent spécifique aux exigences.

13. Composant selon l'une des revendications précédentes, **caractérisé en ce que** les parties de membrure extérieure comprennent une membrure supérieure et une membrure inférieure enroulée (41, 42) qui sont reliées l'une à l'autre par la structure intermédiaire de type treillis (43).

14. Composant selon la revendication 13, **caractérisé en ce que** la membrure supérieure et la membrure inférieure (41, 42) sont reliées l'une à l'autre par deux membrures latérales enroulées (44, 45).

15. Composant selon la revendication 14, **caractérisé en ce que** les membrures latérales (44, 45) sont enroulées de manière intégrée avec la membrure supérieure et la membrure inférieure (41, 42) et la structure intermédiaire (43).

16. Composant selon l'une des revendications 1 à 12, **caractérisé en ce que** les parties de membrure extérieure (62-66) sont placées en forme de cercle et forment une surface extérieure substantiellement annulaire d'un objet substantiellement à symétrie de rotation (50).

17. Composant selon l'une des revendications précédentes, **caractérisé en ce qu'**il est pourvu d'une peau extérieure configurée pratiquement fermée.

18. Procédé de fabrication d'un composant (40) en un produit demi-fini en fibres imprégné de résine synthétique (P) pour lequel le produit demi-fini en fibres (P) est enroulé sur un noyau d'enroulement (5), de préférence en étant aligné, et est ensuite durci et séché, **caractérisé en ce que** le produit demi-fini en fibres (P) est enroulé autour d'un arrangement de bobines d'enroulement (21-30), les parties de membrure extérieure étant fabriquées et enroulées par une technique d'enroulement en étant intégrées avec une structure intermédiaire (43) constituée à la manière d'un treillis et les espaces creux entre les parties de membrure extérieure (41, 42) et la structure intermédiaire (43) étant remplis au moins par zone avec une matière de remplissage (46).

19. Procédé selon la revendication 18, **caractérisé en ce que** les espaces intermédiaires entre les parties de membrure extérieure (41, 42) et la structure intermédiaire (43) sont remplis au moins par zone avec une matière de remplissage (46), de préférence sont moussés avec une mousse plastique technique ou une mousse métallique ou céramique.

20. Procédé selon la revendication 19, **caractérisé en ce que** le produit demi-fini imprégné de résine synthétique (P) est enroulé sur des bobines d'enroulement (21 - 30) qui sont fixées de manière détachable sur une plaque d'enroulement (20) pour les buts du processus d'enroulement, que le composant enroulé (40) est placé dans un moule de fermeture du type châssis (31) qui s'appuie sur la plaque d'enroulement (20) et qui entoure le composant (40), que le moule de fermeture (31) est fermé avec un couvercle (32), le couvercle (32) étant pourvu d'ouvertures de remplissage pouvant être fermées (33) pour la matière de remplissage (46), en particulier pour une mousse technique moussante physiquement ou chimiquement pour remplir les espaces intermédiaires qui restent dans le composant (40) au besoin au moins par zone, que le composant enroulé (40) est chauffé par exemple par réchauffement du noyau d'enroulement de telle manière que la matière de remplissage connaisse une expansion, le composant se comprimant avant de se déformer et que le composant enroulé (40) est étuvé dans un dispositif d'étuvage avant ou, le cas échéant, après la déformation.

21. Procédé selon l'une des revendications 18 à 20, **caractérisé en ce que** le nombre des enroulements fabriqués l'un au-dessus et/ou l'un à côté de l'autre et le cours des enroulements au-dessus des bobines d'enroulement (21 - 30) placées l'une à côté et l'une derrière l'autre est choisi en fonction des forces devant être absorbées par le composant enroulé (40).

22. Procédé selon l'une des revendications 18 à 21, **caractérisé en ce que** des bobines d'enroulement individuelles (21, 22, 29, 30) sont choisies comme inserts qui sont équipés avec des dispositifs de raccord (35), par exemple des forures filetées, pour la fixation d'autres composants de raccord.

23. Procédé selon les revendications 20 à 22, **caractérisé en ce que** le produit demi-fini en fibres (P) est guidé dans la structure intermédiaire de type treillis respectivement par au moins deux bobines d'enroulement du noyau d'enroulement placées l'une à côté de l'autre avant que l'alignement longitudinal des fibres ne soit changé par le changement du sens d'enroulement.

24. Procédé selon l'une des revendications 20 à 23, **caractérisé en ce que** le produit demi-fini en fibres (P) est enroulé dans des enroulements substantiellement parallèles l'un à l'autre par une bobine d'enroulement.

25. Procédé selon l'une des revendications 18 à 24, **caractérisé en ce que** le procédé d'enroulement est effectué de manière automatisée.

26. Procédé selon l'une des revendications 18 à 25, **caractérisé en ce que** l'on utilise comme produit demi-fini en fibres des fibres naturelles carbonisées en lin, chanvre ou jonc de Chine ou des stratifils de carbone, d'aramide et/ou de verre E imprégnées avec une matrice duroplastique ou thermoplastique d'une résine à deux composantes d'une épaisseur d'environ 1,5 mm à environ 4 mm, de préférence environ 2,5 mm.

27. Procédé selon l'une des revendications 18 à 26, **caractérisé en ce qu'**une membrure supérieure et une membrure inférieure (41, 42) sont fabriquées et enroulées par une technique d'enroulement de manière intégrée avec la structure intermédiaire constituée de type treillis (43).

28. Procédé selon l'une des revendications 18 à 26, **caractérisé en ce qu'**un nombre de parties de membrure extérieure (62-66) est fabriqué par une technique d'enroulement, ces parties étant placées en forme de cercle et étant placées sur la périphérie du cercle en alternant avec de grandes bobines d'enroulement (57-61), le produit demi-fini en fibres imprégnées de résine synthétique (P) étant guidé avant et après l'enroulement d'une partie de membrure extérieure par respectivement une grande bobine d'enroulement et que respectivement une section de la structure intermédiaire de type treillis (51-56) est enroulée entre l'enroulement sur deux grandes bobines d'enroulement placées sur la périphérie.

29. Utilisation d'un composant porteur (40 ; 50) selon l'une des revendications 1 à 17 comme support et/ou élément de renforcement pour des véhicules comme, par exemple, des véhicules automobiles ou des camions de construction légère ou comme roue d'adhérence, jante ou équivalent.
